# FASCICULE DE BREVET EUROPEEN

(11) **EP 1 897 267 B1**
(45) Date de publication et mention de la délivrance du brevet: **06.11.2019**
(21) Numéro de dépôt: 06764788.3
(22) Date de dépôt: 14.06.2006
(51) Int. Cl.: H04L 9/08

(54) **PROCEÉDÉ POUR DISPOSER D'UN LIEN DE COMMUNICATION SÉCURISÉ ENTRE UN UTILISATEUR ET UNE ENTITÉ**
VERFAHREN ZUR BEREITSTELLUNG EINER GESICHERTEN KOMMUNIKATION ZWISCHEN EINEM BENUTZER UND EINER ENTITÄT
METHOD FOR PROVIDING A SECURED COMMUNICATION BETWEEN A USER AND AN ENTITY

(30) Priorité: 30.06.2005 FR 0506704
(43) Date de publication de la demande: 12.03.2008
(73) Titulaire: Idemia Identity & Security France, 92400 Courbevoie (FR)
(72) Inventeur: CHABANNE, Hervé, 75015 Paris (FR)
(74) Mandataire: Plasseraud IP
(86) Numéro de dépôt international: PCT/FR2006/001345
(87) Numéro de publication internationale: WO 2007/003732

(56) Documents cités:
- WO-A-00/51244
- US-B1- 6 363 485
- LIU S ET AL: "A practical protocol for advantage distillation and information reconciliation" DESIGNS, CODES AND CRYPTOGRAPHY, KLUWER ACADEMIC PUBLISHERS, BOSTON, US, 2003, pages 39-62, XP002337939 ISSN: 0925-1022
- BENNETT C H ET AL: "GENERALIZED PRIVACY AMPLIFICATION" IEEE TRANSACTIONS ON INFORMATION THEORY, IEEE SERVICE CENTER, PISCATAWAY, NJ, US, vol. 41, no. 6, PART 2, novembre 1995 (1995-11), pages 1915-1923, XP000823297 ISSN: 0018-9448 cité dans la demande
- YEVGENIY DODIS ET AL: "Fuzzy Extractors: How to Generate Strong Keys from Biometrics and Other Noisy Data", 17 April 2004 (2004-04-17), ADVANCES IN CRYPTOLOGY - EUROCRYPT 2004; [LECTURE NOTES IN COMPUTER SCIENCE;;LNCS], SPRINGER-VERLAG, BERLIN/HEIDELBERG, PAGE(S) 523 - 540, XP019005038, ISBN: 978-3-540-21935-4

## Description

La présente invention concerne la sécurisation d'un lien de communication entre un utilisateur et une entité.

La sécurité des communications est un enjeu majeur visant à éviter des fraudes pouvant prendre des formes diverses. En particulier, un lien de communication devrait être sécurisé de façon à empêcher un attaquant passif, à l'écoute de ce lien, de disposer de l'information qui y est transmise.

On note que le terme de lien de communication est à considérer dans un sens large. Il peut en effet s'agir d'un lien de toute nature physique, tel qu'un simple bus de communication ou un canal de télécommunication filaire ou radio, permanent ou occasionnel, et supportant tout protocole de communication.

Il a été proposé d'utiliser des données biométriques pour sécuriser un lien de communication. Les données biométriques, qui sont des informations physiques caractéristiques d'individus respectifs, telles que les empreintes digitales, l'iris des yeux, la voix, présentent en effet l'avantage d'être associées de façon naturelle et permanente à un individu.

Ainsi, il a été envisagé de calculer une clé en appliquant des algorithmes mathématiques à des données biométriques d'un utilisateur, la clé pouvant être utilisée pour sécuriser un lien de communication impliquant cet utilisateur. Dans l'esprit des initiateurs de cette technique, la clé pouvait être retrouvée à tout moment à partir d'une capture biométrique réalisée sur l'utilisateur. En outre, une telle clé devait être distinctive, c'est-à-dire différente pour chaque utilisateur. Cependant, cette technique présente des inconvénients qui la rendent difficilement réalisable en pratique.

Tout d'abord, l'acquisition d'une donnée biométrique est soumise à un aléa important. En effet, deux captures successives peuvent donner des résultats très différents, par exemple, dans le cas de captures d'empreintes digitales, en fonction de l'angle de présentation du doigt et la pression exercée par le doigt sur le capteur d'empreintes. Quelle que soit complexité des algorithmes mathématiques mis en œuvre sur la donnée biométrique acquise, il apparaît très difficile de garantir que la clé obtenue soit toujours la même pour un utilisateur donné, tout en restant signifiante.
Par ailleurs, cette technique prend implicitement comme hypothèse que la biométrie d'un utilisateur est secrète et réservée à cet utilisateur. Cette hypothèse est erronée en réalité, puisqu'il est par exemple aisé d'obtenir les empreintes digitales d'un utilisateur par simple analyse de la surface d'objets touchés par celui-ci. Etant donné que, dans cette technique, la clé d'un utilisateur est complètement déterminée à partir de sa biométrie, un attaquant disposant de données biométriques de cet utilisateur pourrait donc obtenir sa clé et accéder ainsi librement au lien de communication impliquant cet utilisateur.

Le document US 6,363,485 décrit une méthode d'authentification, où une clé secrète est obtenue par détermination d'une clé de chiffrement à partir de mesures biométriques préalables et basée sur une correction d'erreur.

Le document WO00/51244 décrit de limiter la variabilité de mesures biométriques en codant des données biométriques mémorisées à l'aide d'un code correcteur d'erreur.

La publication de Liu S. et Al : « A practical protocol for advantage distillation and information reconciliation », paru dans Designs, codes and Cryptography, Kluwer Academic Publishers, Boston, US, 2003, pages 39-52, XP002337939, divulgue un protocole générale pour la mise en œuvre de distillation d'avantage et de réconciliation d'information.

La publication de Y. Dodis et al., « Fuzzy Extractors : How to Generate Strong Keys from Biometrics and Other Noisy Data », parue dans Advances in Cryptology, Eurocrypt 2004 [Lecture Notes in Computer Science], Springer-Verlag, pages 523-540, XO019005038, décrit des extracteurs pour convertir des informations bruitées en clés utilisables dans des applications cryptographiques, et en particulier pour l'authentification biométrique.

Un but de la présente invention est d'obtenir une clé de sécurité à l'aide de données biométriques, ne présentant pas les inconvénients susmentionnés.

Un autre but de l'invention est d'obtenir un lien de communication sécurisé contre les attaques passives (écoutes), à l'aide de données biométriques.

L'invention propose ainsi un procédé pour disposer d'un lien de communication sécurisé entre un utilisateur et une entité disposant d'une première donnée biométrique relative à l'utilisateur selon la revendication 1.

La deuxième donnée biométrique relative à l'utilisateur n'étant pas transmise sur un lien de communication, un éventuel attaquant ne peut s'en saisir. Même si cet attaquant dispose d'une donnée biométrique relative à l'utilisateur, il est très peu probable que celle- ci soit identique à ladite deuxième donnée biométrique. Cela est dû notamment au fait que chaque acquisition d'une donnée biométrique comporte un grand nombre d'erreurs, c'est-à-dire de différences par rapport à une donnée de référence.

Les phases de réconciliation d'information et d'amplification de secret permettent de s'assurer qu'une clé commune à l'utilisateur et à l'entité est obtenue, sans que celle-ci puisse être également obtenue par l'attaquant ne disposant pas exactement de la deuxième donnée biométrique. Une telle clé peut alors permettre de sécuriser un lien de communication entre l'utilisateur et l'entité, par exemple par authentification ou par chiffrement des échanges.

Une phase de distillation d'avantage dans laquelle on traite la première donnée biométrique et la deuxième donnée biométrique, de façon à prendre l'avantage sur un éventuel attaquant passif, peut éventuellement être mise en oeuvre avant la phase de réconciliation d'information.

Une étape préalable dans laquelle une information relative à l'utilisateur est transmise à l'entité peut également être envisagée. Cette étape peut permettre notamment un contrôle initial, de façon à ne calculer une clé de sécurité que pour des utilisateurs autorisés. Elle peut aussi permettre à l'entité de retrouver la première donnée biométrique relative à l'utilisateur lorsque l'entité dispose de données biométriques relatives à une pluralité d'utilisateurs.

De façon avantageuse, l'information transmise comprend une troisième donnée biométrique relative à l'utilisateur. Celle-ci devrait être différente de la deuxième donnée biométrique, pour éviter que cette dernière ne soit accessible à un attaquant. Elle peut par exemple résulter d'une nouvelle capture biométrique. Elle peut aussi être dérivée de la deuxième donnée biométrique, par exemple en en extrayant des minuties, ce qui présente l'avantage de ne pas nécessiter plusieurs captures biométriques successives. On peut ainsi disposer d'un lien de communication sécurisé entre un utilisateur autorisé et une entité, simplement à partir de données biométriques.

L'invention propose en outre un système pour disposer d'un lien de communication sécurisé entre un utilisateur et une entité selon la revendication 12. apte à communiquer avec une entité.

D'autres particularités et avantages de la présente invention apparaîtront dans la description ci-après d'exemples de réalisation non limitatifs, en référence aux dessins annexés, dans lesquels:
- les figures 1-2 sont des schémas montrant des exemples de systèmes dans lesquels l'invention peut être mise en oeuvre;
- - les figures 3-6 montrent des chaînes numériques simplifiées mises en oeuvre dans un exemple de réalisation de l'invention;
- la figure 7 est un schéma illustrant de façon simplifiée une opération de hachage mise en oeuvre dans un exemple de réalisation de l'invention.

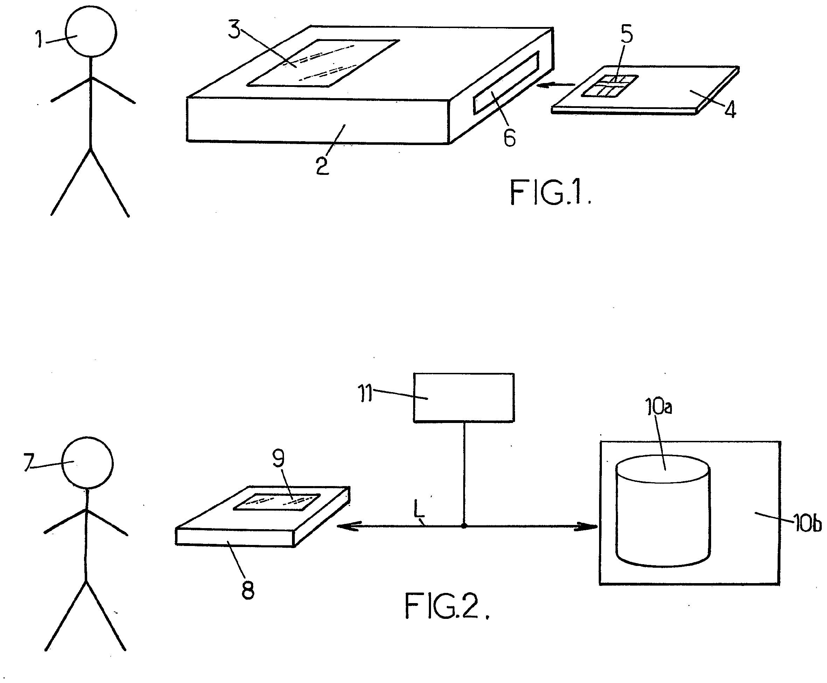

Les figures 1 et 2 montrent un utilisateur 1 ou 7 souhaitant bénéficier d'un lien sécurisé avec une entité 4 ou 10b.

Dans l'exemple illustré sur la figure 1, l'entité considérée est une carte à puce 4. Cette carte 4 peut être par exemple une carte de paiement ou une carte d'identification d'abonné telle qu'une carte SIM (Subscriber Identity Module) par exemple. La puce 5 de la carte 4 stocke des informations dépendant de l'application visée. Elle stocke en outre une donnée biométrique de l'utilisateur 1 à qui la carte 4 appartient. La donnée biométrique en question peut être de tout type. De façon avantageuse, elle peut être définie à partir d'une empreinte digitale, d'une caractéristique de l'iris ou de la voix de l'utilisateur 1. La puce 5 comprend en outre des capacités de calcul dont certaines opérations seront détaillées par la suite.

Par ailleurs, un dispositif 2, qui est par exemple un terminal de paiement ou un terminal de communication tel qu'un téléphone portable, peut être utilisé par l'utilisateur 1. Ce terminal est agencé pour coopérer avec la carte à puce 4. Plus précisément, le terminal 2 est capable de recevoir la carte 4 par exemple dans une fente 6 prévue à cet effet. Lorsque la carte 4 est insérée dans le terminal 2, la puce 5 est en contact avec des bornes correspondantes du terminal, ce qui constitue un lien de communication entre la carte 4 et l'utilisateur 1 via le terminal 2. De plus, terminal 2 est muni de capacités de calcul dont certaines opérations seront détaillées par la suite.

Un capteur biométrique 3 est prévu pour obtenir une donnée biométrique de l'utilisateur 1. Dans l'exemple illustré sur la figure 1, ce capteur fait partie intégrante du terminal 2. On comprend cependant que le capteur pourrait être extérieur au terminal 2, tout en étant capable de transmettre au terminal 2 les données biométriques qu'il acquiert. Il est également possible qu'une donnée biométrique de l'utilisateur 1 soit acquise d'une autre façon.

La figure 2 montre un autre exemple de système dans lequel l'entité considérée est une entité distante 10b comprenant une base de données distante 10a, et avec laquelle l'utilisateur 7 souhaite pouvoir communiquer de manière sécurisée. La base de données 10a stocke par exemple des données biométriques relatives à une pluralité d'utilisateurs. L'entité 10b comprend en outre des capacités de calcul dont certaines opérations seront détaillées par la suite. Cette entité est par exemple un système informatique, tel qu'un serveur de communication.

Par ailleurs, un dispositif 8 comprenant un capteur biométrique 9 est agencé pour communiquer avec l'entité 10b. Il est en outre muni de moyens de communication pour que l'utilisateur 7 puisse disposer d'un lien de communication L avec l'entité 10b. Ce lien de communication est porté par exemple par une liaison filaire ou par une liaison radio. De plus, le dispositif 8 est muni de capacités de calcul dont certaines opérations seront détaillées par la suite.

On suppose qu'un attaquant passif est capable d'écouter les informations échangées sur le lien de communication entre l'utilisateur 1 ou 7 et l'entité 4 ou 10b. Dans l'exemple illustré sur la figure 2, cet attaquant peut par exemple disposer une sonde sur le lien de communication L, de façon à obtenir les informations transmises sur ce lien. De plus, l'attaquant peut effectuer tout type d'opérations sur les informations acquises afin de déjouer la sécurité mise en œuvre entre l'utilisateur et l'entité. A titre d'exemple, l'attaquant peut mettre en œuvre les mêmes opérations que l'utilisateur et l'entité s'il les connaît.

Selon l'invention, on cherche à obtenir une clé, sans que l'attaquant puisse l'acquérir lui-même. Cette clé pourra ensuite être utilisée pour mettre en œuvre des mécanismes de sécurité entre l'utilisateur et l'entité.

A cet effet, on obtient une donnée biométrique de l'utilisateur considéré, du même type que la ou les données biométriques stockées au niveau de l'entité. Par exemple, la donnée biométrique peut être obtenue par acquisition d'une empreinte digitale de l'utilisateur à l'aide d'un capteur biométrique, tels que les capteurs 3 ou 9 des figures 1 et 2 respectivement.

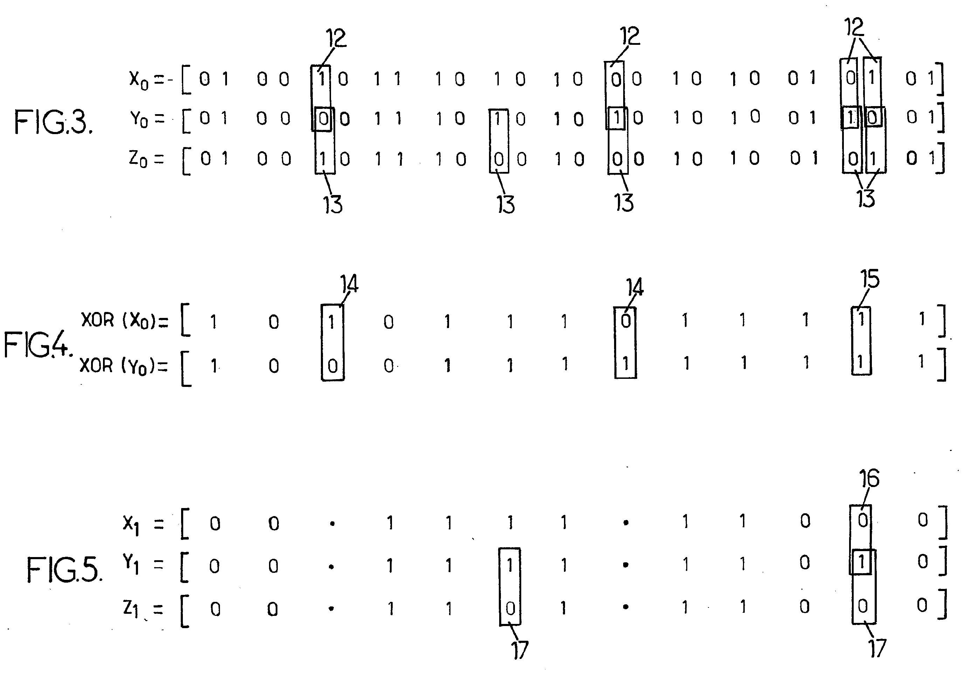

On considère par la suite que la donnée biométrique ainsi acquise peut être décrite par une chaîne numérique, comme la chaîne numérique X₀ de l'exemple illustré sur la figure 3. Bien sûr, d'autres représentations des données biométriques pourraient également être utilisées. Dans l'exemple choisi, la chaîne numérique X₀ comporte un nombre réduit de bits, c'est-à-dire d'éléments binaires, pour faciliter la compréhension des opérations mises en œuvre. En réalité, les chaînes numériques décrivant des données biométriques peuvent être de l'ordre de la dizaine de milliers de bits par exemple.

Par ailleurs, comme cela a été indiqué plus haut, l'entité considérée, par exemple la carte à puce 4 ou l'entité 10b des figures 1 et 2 respectivement, dispose de données biométriques relatives à un ou plusieurs utilisateurs. On suppose ci-après qu'une donnée biométrique est stockée notamment pour l'utilisateur considéré, c'est-à-dire l'utilisateur 1 ou 7 des figures 1 et 2 respectivement. Cette donnée biométrique peut également être décrite par une chaîne numérique, telle que la chaîne numérique Y₀ représentée sur la figure 3.

On constate que les chaînes numériques X₀ et Y₀ présentent un certain nombre de différences 12 (quatre différences dans l'exemple illustré sur la figure 3). Cela est dû au fait, mentionné en introduction, qu'il existe une grande variabilité des mesures biométriques. En d'autres termes, si la chaîne numérique Y₀ est considérée, par convention, comme la chaîne de référence, toute nouvelle chaîne numérique X₀ issue d'une nouvelle acquisition de donnée biométrique comportera des "erreurs" par rapport à cette chaîne de référence. On note que d'autres choix de chaîne de référence sont également possibles, comme X₀ par exemple.

Bien sûr, ces erreurs ne sont pas prévisibles car elles dépendent de nombreux facteurs, comme de l'angle de présentation du doigt et de la pression exercée par le doigt sur le capteur lorsque les données biométriques comprennent des empreintes digitales par exemple. En outre, elles ne sont pas déterminables notamment par un attaquant passif, en particulier parce que la chaîne numérique X₀ n'est pas transmise vers l'entité.

Comme on l'a vu plus haut, un attaquant peut lui-même disposer d'une donnée biométrique relative à l'utilisateur considéré. Celle-ci a par exemple pu être acquise à partir des empreintes digitales laissées à la surface d'objets touchés par l'utilisateur. On comprend donc que la donnée biométrique ainsi obtenue par l'attaquant sera généralement moins précise que celle acquise auprès de l'utilisateur à l'aide d'un capteur biométrique par exemple. Toutefois, on peut également imaginer que l'attaquant dispose d'une donnée biométrique de l'utilisateur très fiable.

Dans l'exemple illustré sur la figure 3, on note Z₀ la chaîne numérique représentant la donnée biométrique relative à l'utilisateur, dont dispose l'attaquant. Cette chaîne numérique présente cinq erreurs, par rapport à la chaîne de référence Y₀, c'est-à-dire une erreur de plus que la chaîne numérique X₀. Dans l'exemple de la figure 3, on a choisi arbitrairement quatre des erreurs 13 identiques aux erreurs 12. Cependant, de façon générale, on note que les erreurs contenues dans Z₀ devraient être indépendantes de celles contenues dans X₀, ces dernières étant inaccessibles à l'attaquant.

De façon avantageuse, on effectue une phase de distillation d'avantage dans laquelle on augmente la probabilité que l'attaquant ait une chaîne numérique présentant un plus grand nombre d'erreurs que la chaîne numérique obtenue côté utilisateur, par exemple par le dispositif 2 ou 8 des figures 1 et 2 respectivement. Autrement dit, cette phase permet au couple utilisateur-entité de prendre l'avantage sur l'attaquant passif. Un exemple d'opérations mises en œuvre dans une telle phase de distillation d'avantage a été divulgué par Martin Gander et Ueli Maurer, dans l'article "On the secret-key rate of binary random variables, Proc. 1994 IEEE International Symposium on Information Theory (Abstracts), 1994", p. 351. Bien sûr, d'autres opérations peuvent être mises en œuvre à condition qu'elles permettent bien de prendre l'avantage sur l'attaquant passif.

On note en outre que cette phase de distillation d'avantage peut ne pas être mise en œuvre du fait, mentionné plus haut, que l'attaquant aura généralement d'emblée une chaîne numérique comportant plus d'erreurs que celle de l'utilisateur lui-même. Toutefois, lorsqu'il existe un risque que l'attaquant dispose d'une chaîne numérique avec peu d'erreurs, il est préférable de réaliser cette phase.

Dans un exemple d'une telle phase de distillation d'avantage, les chaînes numériques X₀ et Y₀ sont décomposées en groupes de N valeurs numériques, avec N entier. Dans l'exemple illustré sur les figures 3 et 4, les bits de X₀ et Y₀ sont groupés par couple (N=2). Puis, pour chaque couple ainsi identifié, on applique un "OU exclusif' (XOR) de façon à obtenir un "1" lorsque les bits du couple considéré sont différents et un "0" lorsqu'ils sont identiques.

On compare ensuite les résultats du OU exclusif sur des groupes correspondants (c'est-à-dire de même rang) de X₀ et Y₀. Pour cela, chacun de l'utilisateur (ou du dispositif qu'il utilise) et de l'entité communique à l'autre les résultats du OU exclusif qu'il a effectué.

On détermine alors de nouvelles chaînes numériques X₁ et Y₁, en conservant par exemple les premières valeurs numériques de chaque groupe de X₀ et Y₀ respectivement pour lequel le résultat du OU exclusif est le même que pour le groupe correspondant de l'autre chaîne numérique (Y₀ ou X₀). Les autres groupes sont ignorés et ne sont pas pris en compte dans la constitution des chaînes numériques X₁ et Y₁.

Dans l'exemple illustré sur la figure 4, on constate deux différences entre des bits du OU exclusif effectué respectivement sur X₀ et Y₀ (différences 14). On notera que le OU exclusif effectué sur l'avant-dernier couple (référence 15 sur la figure 4) a le même résultat, à savoir un "1", pour X₀ et Y₀, du fait que chacun des deux bits du couple en question de X₀ diffère des bits correspondants de Y₀.

Les chaînes numériques X₁ et Y₁ résultant de cette phase de distillation d'avantage sont représentées sur la figure 5. Y₁ devient alors la nouvelle référence. On constate que X₁ et Y₁ présentent une seule différence entre elles (différence 16), contre quatre différences entre X₀ et Y₀. On comprend ainsi que la distillation d'avantage peut faire chuter rapidement le nombre de différences entre les chaînes numériques de l'utilisateur et de l'entité.

Si l'attaquant passif décide d'agir comme le font l'utilisateur (ou le dispositif qu'il utilise) et l'entité, il peut alors capter les résultats du OU exclusif échangés entre ceux-ci et en déduire une chaîne Z₁ selon les mêmes principes. Z₁ comprend alors le premier bit de chaque couple de Z₀ ayant le même rang que deux couples correspondants de X₀ et Y₀ pour lesquels le même résultat du OU exclusif a été obtenu. Comme le montre la figure 5, la chaîne numérique Z₁ obtenue dans l'exemple comprend deux différences avec Y₁ (différences 17), soit encore une différence de plus que X₁.

La phase de distillation d'avantage peut être répétée un nombre n de fois, avec n entier, jusqu'à ce que la chaîne numérique Xₙ ait un taux d'erreur par rapport à Yₙ inférieur à un seuil choisi. Par exemple, le nombre n peut être choisi en fonction d'un taux moyen de variabilité des mesures d'acquisition des données biométriques.

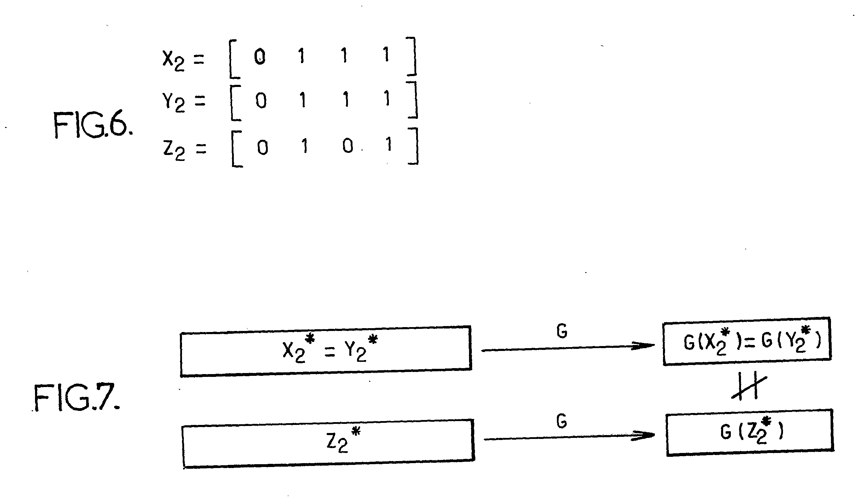

Dans l'exemple illustré sur les figures, une identité entre les chaînes numériques, côté utilisateur et côté entité, est obtenue dès la deuxième passe de la phase de distillation d'avantage. En effet, comme cela est montré sur la figure 6, les chaînes X₂ et Y₂ sont identiques.

En revanche, la chaîne Z₂ obtenue, lors de la deuxième passe, par un attaquant passif qui met en œuvre les mêmes opérations que l'utilisateur et l'entité, reste différente de la chaîne de référence Y₂.

On peut montrer que quelle que soit la technique employée par l'attaquant pour tenter de découvrir les chaînes numériques obtenues par l'utilisateur et l'entité, cet attaquant obtiendra toujours une chaîne numérique erronée, c'est-à-dire différente de celles de l'utilisateur et de l'entité.

Une phase de réconciliation d'information est ensuite mise en œuvre. Elle consiste à éliminer encore des erreurs résiduelles dans la chaîne numérique de l'utilisateur (ou de l'entité lorsque la référence est la chaîne de l'utilisateur), pour les cas où la distillation d'avantage n'aurait pas déjà supprimé toutes les erreurs.

Dans cette phase de réconciliation d'information, un protocole de correction d'erreur est utilisé. Ce protocole devrait de préférence être choisi pour minimiser les informations transmises entre l'utilisateur et l'entité et qui pourraient représenter des informations pertinentes exploitables par l'attaquant.

Un exemple de protocole est le protocole "Cascade" décrit par de G. Brassard et L. Salvail dans l'article "Secret-key reconciliation by public discussion, EUROCRYPT '93 : Workshop on the theory and application of cryptographie techniques on Advances in cryptology, Springer-Verlag New York, Inc., 1994, pp.410-423".

Avec le protocole Cascade, les deux parties à la communication s'accordent aléatoirement et publiquement sur une permutation qu'ils appliquent respectivement sur les chaînes numériques qu'ils ont obtenues à l'issue de la distillation d'avantage. Le résultat de ces permutations est ensuite scindé en blocs de taille adaptative déterminée. Pour chaque bloc ainsi obtenu, on exécute une primitive DICHOT. Lorsque la parité des blocs correspondants pour les deux parties est identique, la primitive calculée retourne la position d'une différence au sein de ces blocs. Puis l'une des parties corrige cette erreur. Des étapes supplémentaires dites de "bactracking" sont également prévues pour s'assurer que l'ensemble référençant tous les blocs dont la parité a été modifiée suite à la correction d'une erreur soit finalement vide.

A l'issue de la phase de réconciliation d'information, l'utilisateur et l'entité disposent d'une même chaîne numérique avec un niveau de probabilité prédéterminé. Dans l'exemple décrit en référence aux figures, on note X₂* et Y₂* les chaînes numériques identiques ainsi obtenues côté utilisateur et côté entité respectivement, c'est-à-dire les chaînes X₂ et Y₂ après correction. L'attaquant possède, quant à lui, une chaîne numérique Z₂* qui diffère de X₂* et Y₂*, grâce notamment aux propriétés des phases de distillation d'avantage et/ou de réconciliation d'information.

Une troisième phase dite d'amplification de secret est ensuite mise en œuvre. L'objet d'une telle phase a été divulgué par Charles H. Bennett, Gilles Brassard, Claude Crépeau, and Ueli M. Maurer, dans l'article "Generalized privacy amplification, IEEE Transaction on Information Theory (1995)". Elle consiste à appliquer une fonction de hachage aux chaînes numériques obtenues par l'utilisateur et l'entité à l'issue de la phase précédente, c'est-à-dire à X₂* et Y₂* dans notre exemple.

Une fonction de hachage est une fonction de compression permettant d'obtenir une information plus courte qu'une information initiale à laquelle elle est appliquée.

Un exemple de fonction de hachage pouvant être utilisée est celui divulgué par Kaan Yüksel, dans le document "Universal hashing for ultra-low-power cryptographie hardware applications, Master's thesis, Worcester Polytechnic Institute, 2004". Cette fonction a pour avantage de requérir très peu de ressources calculatoires.

La figure 7 montre l'application de la fonction de hachage G à X₂* et Y₂*. Puisque X₂*=Y₂*, on a aussi G(X₂*)=G(Y₂*). Ainsi, l'utilisateur (ou le dispositif qu'il utilise) et l'entité disposent finalement d'une même chaîne numérique de taille limitée. Dans un cas réel, G(X₂*) et G(Y₂*) sont par exemple des chaînes numériques comprenant de l'ordre d'une centaine de bits.

A l'inverse, l'attaquant dispose d'une chaîne Z₂* différente de X₂* et Y₂*. Même si cet attaquant connaît la fonction de hachage utilisée par l'utilisateur et l'entité, et tente de calculer G(Z₂*), il obtiendra ainsi une chaîne numérique différente de G(X₂*) et G(Y₂*).

En pratique, pour s'assurer que les chaînes numériques G(X₂*) et G(Y₂*) soient suffisamment signifiantes, c'est-à-dire qu'elles prennent des valeurs suffisamment distinctives en fonction des chaînes numériques de départ X₂* et Y₂*, on peut définir un nombre de bits seuil, de façon que G(X₂*) et G(Y₂*) soient calculés uniquement si X₂* et Y₂* comprennent un nombre de bits supérieur à ce seuil. Un tel seuil peut par exemple se situer entre quelques dizaines et quelques centaines de bits.

Par la suite, la chaîne numérique G(X₂*)=G(Y₂*) commune à l'utilisateur et à l'entité peut être utilisée pour disposer d'un lien de communication sécurisé entre eux. Cette chaîne constitue ainsi une clé secrète partagée uniquement par l'utilisateur et l'entité. Elle peut par exemple permettre d'authentifier l'utilisateur. A cet effet, une information d'authentification, tel qu'un code d'identification par exemple, peut être transmise depuis l'utilisateur vers l'entité, cette information étant chiffrée à l'aide de ladite clé. La clé peut également permettre de chiffrer toute information transmise sur le lien de communication entre l'utilisateur et l'entité. D'autres applications sont également envisageables à partir de la détermination de cette clé.

Dans ce qui précède, on a supposé que la donnée biométrique relative à l'utilisateur considéré était directement disponible au niveau de l'entité. Cela peut en effet être le cas lorsque la donnée biométrique de l'utilisateur est la seule à être stockée au niveau de l'entité. Par exemple, dans le cas illustré sur la figure 1, la carte à puce 4 appartient à l'utilisateur 1 et stocke uniquement sa donnée biométrique, si bien qu'il n'existe pas d'ambiguïté sur la donnée biométrique à sélectionner pour mettre en œuvre, au niveau de la carte à puce 4, les opérations décrites plus haut.

En revanche, lorsque plusieurs données biométriques relatives à des utilisateurs différents sont stockées dans une mémoire de l'entité, comme c'est le cas de la base de données 10a de la figure 1, il convient alors de communiquer à l'entité 10b une information relative à l'utilisateur 7 qui lui permettra de retrouver la donnée biométrique correspondante, afin de lui appliquer les opérations décrites plus haut. L'information transmise peut être de toute nature, du moment qu'il n'existe pas d'inconvénient à la transmettre de façon non sécurisée. Il peut par exemple s'agir d'une identité de l'utilisateur en question. La base de données 10a devrait alors stocker les identités de chaque utilisateur en correspondance avec leurs données biométriques, de façon à pouvoir déterminer la donnée biométrique de l'utilisateur 7, sur réception de son identité.

Dans un mode de réalisation avantageux de l'invention, un contrôle est effectué préalablement à la mise en œuvre de certaines au moins des opérations décrites plus haut, telles que les phases de distillation d'avantage, réconciliation d'information et amplification de secret. Ce contrôle vise à éviter qu'un lien sécurisé avec l'entité puisse être ouvert pour n'importe qui.

Dans ce mode de réalisation, on considère que l'entité stocke en mémoire les données biométriques des utilisateurs autorisés, c'est-à-dire pour lesquels l'utilisation d'un lien sécurisé est autorisée. Une information relative à l'utilisateur est transmise à l'entité. Après réception par l'entité, cette information servira à vérifier qu'une donnée biométrique est stockée dans la mémoire de l'entité, afin de déterminer s'il s'agit d'un utilisateur autorisé. Les opérations décrites plus haut ne seront alors mises en œuvre que s'il s'agit d'un utilisateur autorisé.

Lorsque l'entité stocke en mémoire des données biométriques relatives à une pluralité d'utilisateurs, la même information transmise par un utilisateur peut servir à vérifier qu'il s'agit d'un utilisateur autorisé et à retrouver la donnée biométrique correspondante comme décrit plus haut. Ainsi, l'information transmise peut être de toute nature, du moment qu'il n'existe pas d'inconvénient à la transmettre de façon non sécurisée. Il peut par exemple s'agir d'une identité de l'utilisateur en question.

Dans un mode de réalisation particulièrement avantageux, l'information transmise à l'entité est une donnée biométrique de l'utilisateur. Ainsi, l'ensemble des opérations mises en œuvre par l'invention, à la fois pour le contrôle initial et pour le calcul de la clé, sont réalisées à base de données biométriques.

La donnée biométrique transmise à l'entité peut par exemple résulter d'une acquisition effectuée à l'aide d'un capteur biométrique, tel que le capteur 3 ou 9 des figures 1 et 2 respectivement. On évitera cependant de transmettre la donnée biométrique (assimilable à une chaîne numérique avec les erreurs qu'elle comporte) sur laquelle les différentes opérations décrites plus haut seront effectuées. En effet, une telle transmission en clair pourrait faire l'objet d'une écoute par l'attaquant passif, qui pourrait alors être capable de calculer la clé de la même façon que l'utilisateur et l'entité.

Ainsi, si on note X₀ la chaîne numérique relative à l'utilisateur et sur laquelle les opérations décrites plus haut sont effectuées, il est possible de transmettre à l'entité une chaîne numérique X₀', issue d'une autre acquisition biométrique. Cela ne pose pas de problème car, du fait de la variabilité des mesures effectuées par le capteur biométrique, la chaîne X₀' comporte des erreurs différentes de celles présentées par X₀. Un éventuel attaquant obtenant la chaîne X₀' ne pourrait de toute façon pas en déduire une clé identique à celle obtenue par l'utilisateur à partir de X₀.

Avantageusement, la donnée biométrique transmise à l'entité peut être dérivée de celle sur laquelle les opérations décrites plus haut sont effectuées telle que la chaîne numérique X₀ de l'exemple ci-dessus. Ce mode de fonctionnement présente l'avantage que l'utilisateur n'a pas besoin de subir deux captures biométriques successives. La donnée biométrique transmise peut par exemple se présenter sous la forme de la chaîne numérique X₀ dans laquelle des modifications ont été introduites. Dans ce cas, on veillera à ce que les modifications introduites soient suffisantes pour éviter qu'un attaquant puisse retrouver la chaîne X₀.

En variante, la donnée biométrique transmise comprend des minuties, c'est-à-dire des données extraites de la donnée biométrique sur laquelle les opérations décrites plus haut sont effectuées. Par exemple, si la donnée biométrique acquise est relative à une empreinte digitale, les minuties en question peuvent comprendre quelques distances entre des points de référence de cette empreinte digitale. De cette façon, un utilisateur peut se voir attribuer une clé à partir d'une seule capture de donnée biométrique.

On comprendra que, dans les cas où l'information transmise à l'entité comprend une donnée biométrique, celle-ci pourra être utilisée par l'entité pour vérifier si l'utilisateur considéré est autorisé ou non. A cet effet, lorsque l'entité stocke en mémoire une seule donnée biométrique, comme ce pourrait être le cas dans l'exemple illustré sur la figure 1 où la carte à puce 4 stocke dans sa puce 5 la donnée biométrique relative à son utilisateur 1, le contrôle susmentionné consiste à comparer la donnée biométrique transmise à celle stockée dans la mémoire de l'entité. Lorsque l'entité stocke en mémoire une pluralité de données biométriques, comme ce pourrait être le cas dans l'exemple illustré sur la figure 2 où l'entité 10b stocke dans sa base de données 10a les données biométriques de différents utilisateurs, le contrôle susmentionné peut consister à comparer la donnée biométrique transmise à chacune des données biométriques stockées dans la mémoire de l'entité, pour détecter une éventuelle adéquation entre elles.

Si des minuties, ou d'autres données extraites d'une donnée biométrique de base sont transmises à l'entité, cette dernière devrait alors obtenir des minuties correspondantes à partir de la donnée biométrique qu'elle stocke en mémoire, afin que les minuties puissent faire l'objet d'une comparaison.

## Revendications

1. Procédé pour disposer d'un lien de communication sécurisé entre un utilisateur (1;7) et une entité (4;10b) disposant d'une première donnée biométrique (Y₀) relative à l'utilisateur, le procédé comprenant les étapes suivantes :
- obtenir, côté utilisateur, une deuxième donnée biométrique (X₀) relative à l'utilisateur et du même type que la première donnée biométrique ;
- mettre en œuvre une phase de distillation d'avantage dans laquelle on traite la première donnée biométrique (Y₀) et la deuxième donnée biométrique (X₀), de façon à prendre l'avantage sur un éventuel attaquant passif,
- mettre en œuvre une phase de réconciliation d'information, dans laquelle on applique un protocole de correction d'erreurs à la première donnée biométrique et à la deuxième donnée biométrique, de façon à obtenir des premières données résultantes, côté utilisateur, et des deuxième données résultantes côté entité, les premières et deuxièmes données résultantes étant identiques avec un niveau de probabilité prédéterminé ;
- comparer un nombre de bits des premières données résultantes et des deuxièmes données résultantes à un seuil donné ; et
- si les premières données résultantes et les deuxièmes données résultantes de la phase de réconciliation comprennent un nombre de bits supérieur au seuil donné, mettre en œuvre une phase d'amplification de secret dans laquelle on applique une fonction de hachage (G) auxdites premières données résultantes côté utilisateur et dans laquelle on applique la fonction de hachage aux deuxièmes données résultantes côté entité, pour obtenir une clé commune (G(Y₂*),G(X₂*)) à l'utilisateur et à l'entité.

2. Procédé selon la revendication 1 , dans lequel la deuxième donnée biométrique (X₀) est obtenue à l'aide d'un capteur biométrique (3;9).

3. Procédé selon l'une quelconque des revendications précédentes, comprenant une étape préalable dans laquelle une information relative à l'utilisateur (1;7) est transmise à l'entité (4;10b).

4. Procédé selon la revendication 3, dans lequel l'information transmise comprend une troisième donnée biométrique relative à l'utilisateur, dans lequel on compare les première et troisième données biométriques, les phases de réconciliation d'information et d'amplification de secret étant mises en œuvre uniquement lorsque ladite comparaison révèle une adéquation entre les première et troisième données biométriques.

5. Procédé selon la revendication 3, dans lequel l'entité (10b) dispose de données biométriques relatives à une pluralité d'utilisateurs, et dans lequel on retrouve, à l'entité, ladite première donnée biométrique à partir de l'information transmise, les phases de réconciliation d'information et d'amplification de secret étant mises en œuvre uniquement lorsque ladite première donnée biométrique a été retrouvée à partir de ladite information transmise.

6. Procédé selon la revendication 5, dans lequel l'information transmise à l'entité comprend une identité de l'utilisateur.

7. Procédé selon la revendication 5 ou 6 dans lequel l'information transmise comprend une troisième donnée biométrique relative à l'utilisateur.

8. Procédé selon la revendication 4 ou 7, dans lequel la troisième donnée biométrique comprend une information dérivée de la deuxième donnée biométrique.

9. Procédé selon la revendication 8, dans lequel la troisième donnée biométrique comprend des minuties obtenues à partir de la deuxième donnée biométrique.

10. Procédé selon la revendication 4 ou 7, dans lequel la troisième donnée biométrique est obtenue à l'aide d'un capteur biométrique (3;9) et est distincte de la deuxième donnée biométrique.

11. Procédé selon l'une quelconque des revendications précédentes, comprenant en outre une étape ultérieure d'authentification dans laquelle l'utilisateur transmet à l'entité une information grâce à laquelle l'entité peut authentifier l'utilisateur, ladite information étant chiffrée à l'aide de la clé obtenue.

12. Système pour disposer d'un lien de communication sécurisé entre un utilisateur (1;7) et une entité (4;10b) disposant d'une première donnée biométrique (Y₀) relative à l'utilisateur, le système étant apte à mettre en œuvre le procédé selon l'une quelconque des revendications précédentes et comprenant :
- des moyens pour obtenir, côté utilisateur, une deuxième donnée biométrique (X₀) relative à l'utilisateur et du même type que la première donnée biométrique;
- des moyens pour mettre en œuvre une phase de distillation d'avantage dans laquelle on traite la première donnée biométrique (Y₀) et la deuxième donnée biométrique (X₀), de façon à prendre l'avantage sur un éventuel attaquant passif,
- des moyens pour mettre en œuvre une phase de réconciliation d'information, dans laquelle on applique un protocole de correction d'erreurs à la première donnée biométrique et à la deuxième donnée biométrique, de façon à obtenir des premières données résultante, côté utilisateur et des deuxièmes données résultantes côté entité, les premières et deuxièmes données résultantes étant identiques avec un niveau de probabilité prédéterminé ; et
- des moyens pour comparer un nombre de bits des premières données résultantes et des deuxièmes données résultantes à un seuil donné ; et
- des moyens pour, si les premières données résultantes et les deuxièmes données résultantes de la phase de réconciliation comprennent un nombre de bits supérieur au seuil donné, mettre en œuvre une phase d'amplification de secret dans laquelle on applique une fonction de hachage (G) auxdites premières données résultantes côté utilisateur et dans laquelle on applique la fonction de hachage aux deuxièmes données résultantes côté entité, pour obtenir une clé commune (G(Y₂*),G(X₂*)) à l'utilisateur et à l'entité.

## Patentansprüche

1. Verfahren zum Bereitstellen einer gesicherten Kommunikationsverbindung zwischen einem Benutzer (1;7) und einer Entität (4;10b), die über ein erstes biometrisches Datum (Y₀) in Bezug auf den Benutzer verfügt, wobei das Verfahren die folgenden Schritte aufweist:
- Erhalten auf der Benutzerseite eines zweiten biometrisches Datums (X₀) in Bezug auf den Benutzer und vom gleichen Typ wie das erste biometrische Datum,
- Umsetzen von einer Phase des Herausfilterns eines Vorteils, in der das erste biometrische Datum (Y₀) und das zweite biometrische Datum (X₀) derart verarbeitet werden, um den Vorteil gegenüber einem möglichen passiven Angreifer zu nutzen,
- Umsetzen von einer Informationsabstimmungsphase, in der ein Fehlerkorrekturprotokoll auf das erste biometrische Datum und das zweite biometrische Datum derart angewendet wird, um erste resultierende Daten auf der Benutzerseite und zweite resultierende Daten auf der Entitätsseite zu erhalten, wobei die ersten und zweiten resultierenden Daten mit einem vorbestimmten Wahrscheinlichkeitsniveau identisch sind,
- Vergleichen von einer Anzahl von Bits der ersten resultierenden Daten und der zweiten resultierenden Daten mit einem gegebenen Schwellenwert und
- wenn die ersten resultierenden Daten und die zweiten resultierenden Daten der Abstimmungsphase eine Anzahl von Bits aufweisen, die größer als der gegebene Schwellenwert ist, Umsetzen von einer Geheimnisverstärkungsphase, in der eine Hashfunktion (G) auf die ersten resultierenden Daten auf der Benutzerseite angewendet wird und in der die Hashfunktion auf die zweiten resultierenden Daten auf der Entitätsseite angewendet wird, um einen Schlüssel (G(Y₂*), G(X₂*)) zu erhalten, der dem Benutzer und der Entität gemeinsam ist.

2. Verfahren nach Anspruch 1, wobei das zweite biometrische Datum (X₀) mit Hilfe von einem biometrischen Sensor (3;9) erhalten wird.

3. Verfahren nach einem der vorhergehenden Ansprüche, umfassend einen vorhergehenden Schritt, w eine Information in Bezug auf den Benutzer (1;7) an die Entität (4;10b) übertragen wird.

4. Verfahren nach Anspruch 3, wobei die übertragene Information ein drittes biometrisches Datum in Bezug auf den Benutzer aufweist, wobei das erste und das dritte biometrische Datum verglichen werden, wobei die Informationsabstimmungsphase und die Geheimnisverstärkungsphase nur umgesetzt werden, wenn das Vergleichen eine Übereinstimmung zwischen dem ersten und dem dritten biometrischen Datum zeigt.

5. Verfahren nach Anspruch 3, wobei die Entität (10b) über biometrische Daten in Bezug auf mehrere Benutzer verfügt und wobei in der Entität das erste biometrische Datum ausgehend von der übertragenen Information wiedergefunden wird, wobei die Informationsabstimmungsphase und die Geheimnisverstärkungsphase nur umgesetzt werden, wenn das erste biometrische Datum ausgehend von der übertragenen Information wiedergefunden worden ist.

6. Verfahren nach Anspruch 5, wobei die Information, die an die Entität übertragen wird, eine Identität des Benutzers aufweist.

7. Verfahren nach Anspruch 5 oder 6, wobei die übertragene Information ein drittes biometrisches Datum in Bezug auf den Benutzer aufweist.

8. Verfahren nach Anspruch 4 oder 7, wobei das dritte biometrische Datum eine Information aufweist, die von dem zweiten biometrischen Datum abgeleitet wird.

9. Verfahren nach Anspruch 8, wobei das dritte biometrische Datum Minuten aufweist, die ausgehend von dem zweiten biometrischen Datum erhalten werden.

10. Verfahren nach Anspruch 4 oder 7, wobei das dritte biometrische Datum mit Hilfe von einem biometrischen Sensor (3;9) erhalten wird und von dem zweiten biometrischen Datum verschieden ist.

11. Verfahren nach einem der vorhergehenden Ansprüche, ferner umfassend einen weiteren Schritt des Authentifizierens, wobei der Benutzer eine Information an die Entität überträgt, dank der die Entität den Benutzer identifizieren kann, wobei die Information mit Hilfe von dem erhaltenen Schlüssel verschlüsselt wird.

12. System zum Bereitstellen einer gesicherten Kommunikationsverbindung zwischen einem Benutzer (1;7) und einer Entität (4;10b), die über ein erstes biometrisches Datum (Y₀) in Bezug auf den Benutzer verfügt, wobei das System geeignet ist, das Verfahren nach einem der vorhergehenden Ansprüche umzusetzen und aufweist:
- Mittel zum Erhalten auf der Benutzerseite eines zweiten biometrisches Datums (X₀) in Bezug auf den Benutzer und vom gleichen Typ wie das erste biometrische Datum,
- Mittel zum Umsetzen von einer Phase des Herausfilterns eines Vorteils, in der das erste biometrische Datum (Y₀) und das zweite biometrische Datum (X₀) derart verarbeitet werden, um den Vorteil gegenüber einem möglichen passiven Angreifer zu nutzen,
- Mittel zum Umsetzen von einer Informationsabstimmungsphase, in der ein Fehlerkorrekturprotokoll auf das erste biometrische Datum und das zweite biometrische Datum derart angewendet wird, um erste resultierende Daten auf der Benutzerseite und zweite resultierende Daten auf der Entitätsseite zu erhalten, wobei die ersten und zweiten resultierenden Daten mit einem vorbestimmten Wahrscheinlichkeitsniveau identisch sind, und
- Mittel zum Vergleichen von einer Anzahl von Bits der ersten resultierenden Daten und der zweiten resultierenden Daten mit einem gegebenen Schwellenwert und
- Mittel, um, wenn die ersten resultierenden Daten und die zweiten resultierenden Daten der Abstimmungsphase eine Anzahl von Bits aufweisen, die größer als der gegebene Schwellenwert ist, eine Geheimnisverstärkungsphase umzusetzen, in der eine Hashfunktion (G) auf die ersten resultierenden Daten auf der Benutzerseite angewendet wird und in der die Hashfunktion auf die zweiten resultierenden Daten auf der Entitätsseite angewendet wird, um einen Schlüssel (G(Y₂*), G(X₂*)) zu erhalten, der dem Benutzer und der Entität gemeinsam ist.

## Claims

1. A method for providing a secured communication link between a user (1;7) and an entity (4;10b) having a first set of biometric data (Y₀) relating to the user, the method comprising the following steps:
- obtaining a second set of biometric data (X₀) relating to the user and of the same type as the first set of biometric data;
- implementing an advantage distillation phase in which the first set of biometric data (Y₀) and the second set of biometric data (X₀) are processed so as to gain the advantage over any passive attacker,
- implementing an information reconciliation phase in which an error-correction protocol is applied to the first set of biometric data and to the second set of biometric data, in order to obtain first resultant data, on the side of the user, and second resultant data, on the side of the entity, the first and second resultant data being identical with a predetermined probability level;
- comparing a number of bits of the first resultant data and of the second resultant data with a given threshold; and
- if the first resultant data and the second resultant data of the reconciliation phase comprise a number of bits higher than the given threshold, implementing a secret amplification phase in which a hashing function (G) is applied to said first resultant data on the side of the user and in which the hashing function is applied to the second resultant data on the side of the entity to obtain a key (G(Y₂*), G(X₂*)) common to the user and to the entity.

2. The method as claimed in claim 1, in which the second set of biometric data (X₀) is obtained using a biometric sensor (3;9).

3. The method as claimed in any one of the preceding claims, comprising a preliminary step in which information relating to the user (1;7) is transmitted to the entity (4;10b).

4. The method as claimed in claim 3, in which the transmitted information comprises a third set of biometric data relating to the user, in which the first and third sets of biometric data are compared, the information reconciliation and secret amplification phases being implemented only when said comparison reveals a match between the first and third sets of biometric data.

5. The method as claimed in claim 3, in which the entity (10b) has biometric data relating to a plurality of users, and in which said first set of biometric data is retrieved, on the entity, from transmitted information, the information reconciliation and secret amplification phases being implemented only when said first set of biometric data has been retrieved from said transmitted information.

6. The method as claimed in claim 5, in which the information transmitted to the entity comprises an identity of the user.

7. The method as claimed in claim 5 or 6, in which the transmitted information comprises a third set of biometric data relating to the user.

8. The method as claimed in claim 4 or 7, in which the third set of biometric data comprises information derived from the second set of biometric data.

9. The method as claimed in claim 8, in which the third set of biometric data comprises minutiae obtained from the second set of biometric data.

10. The method as claimed in claim 4 or 7, in which the third set of biometric data is obtained using a biometric sensor (3;9) and is distinct from the second set of biometric data.

11. The method as claimed in any one of the preceding claims, also comprising a subsequent authentication step in which the user transmits to the entity information from which the entity can authenticate the user, said information being encrypted using the key obtained.

12. A system for providing a secured communication link between a user (1;7) and an entity (4;10b) having a first set of biometric data (Y₀) relating to the user, the system bein adapted to implement the method according to any one of the preceding claims and comprising:
- means for obtaining, on the side of the use, a second set of biometric data (X₀) relating to the user (1;7) and of the same type as the first set of biometric data;
- means for implementing an advantage distillation phase in which the first set of biometric data (Y₀) and the second set of biometric data (X₀) are processed so as to gain the advantage over any passive attacker,
- means for implementing an information reconciliation phase in which an error-correction protocol is applied to the first set of biometric data and to the second set of biometric data, in order to obtain first resultant data, on the side of the user, and second resultant data, on the side of the entity, the first and second resultant data being identical with a predetermined probability level;
- means for comparing a number of bits of the first resultant data and of the second resultant data with a given threshold; and
- means for, if the first resultant data and the second resultant data of the reconciliation phase comprise a number of bits higher than the given threshold, implementing a secret amplification phase in which a hashing function (G) is applied to said first resultant data on the side of the user and in which the hashing function is applied to the second resultant data on the side of the entity to obtain a key (G(Y₂*), G(X₂*)) common to the user and to the entity.
